# EUROPÄISCHE PATENTANMELDUNG

(11) **EP 4 503 398 A1**
(43) Veröffentlichungstag der Anmeldung: **05.02.2025**
(21) Anmeldenummer: 23189130.0
(22) Anmeldetag: 02.08.2023
(51) Int. Cl.: H02K 7/106, H02K 11/00, H02K 7/14, H02K 9/06

(54) **INTEGRIERTER MOTORBREMSWIDERSTAND**

(71) Anmelder: Hilti Aktiengesellschaft, 9494 Schaan (LI)
(72) Erfinder: Lacher, Michael, 86830 Schwabmünchen (DE); Scherbaum, Markus, 86853 Gennach (DE)
(74) Vertreter: Hilti Aktiengesellschaft Corporate Intellectual Property

(57) **Zusammenfassung**

Elektromotor, insbesondere als Antrieb für eine Werkzeugmaschine, enthaltend eine Energieversorgung, einen Stator mit einem Statorblechpaket und wenigstens zwei Spulenwicklungen, einen relativ zu dem Statorblechpaket rotierbaren Rotor sowie eine Steuereinrichtung.

An einer Außenmantelfläche des Statorblechpakets ist wenigstens eine Aussparung zur Aufnahme wenigstens eines Widerstandselements enthalten, wobei das wenigstens eine Widerstandselement zur Umwandlung einer elektrischen Spannung, welche während eines Bremsvorgangs des Rotors durch die Spulenwicklungen des Stators erzeugbar ist, in Wärme ausgestaltet ist.

## Beschreibung

Die vorliegende Erfindung betrifft einen Elektromotor, insbesondere als Antrieb für eine Werkzeugmaschine, enthaltend eine Energieversorgung, einen Stator mit einem Statorblechpaket und wenigstens zwei Spulenwicklungen, einen relativ zu dem Statorblechpaket rotierbaren Rotor sowie eine Steuereinrichtung.

Des Weiteren betrifft die vorliegende Erfindung einen Stator für einen Elektromotor.

Darüber hinaus betrifft die vorliegende Erfindung eine Werkzeugmaschine mit Elektromotor.

Aus dem Stand der Technik sind Elektromotoren (insbesondere als Antrieb für Werkzeugmaschinen) bekannt, die zum Erzeugen eines Drehmoments im Wesentlichen einen Stator und einen relativ zu dem Stator drehbaren Rotor enthalten. Für die Funktionsweise des Elektromotors und insbesondere zum wahlweisen Erzeugen eines Magnetfeldes ist es notwendig, dass der Stator eine Vielzahl von Spulenwicklungen um die jeweiligen Polzähne bzw. Statorzähne aufweist. Zum Herstellen einer Spule bzw. Spulenwicklung wird ein Wickeldraht in mehreren Lagen um den Polzahn bzw. Statorzahn gewickelt. Der Polzahn bzw. Statorzahn dient dabei als Träger für die Spulenwicklung.

Motorbremsen sind häufig notwendig und ein integraler Bestandteil des Motors, um den Motor schnellstmöglich abzubremsen bzw. die Rotation des Rotors relativ zum Stator zu stoppen.

Bisher am Markt erhältliche und insbesondere aus dem Stand der Technik bekannte Motorbremsen weisen oftmals das Problem auf, das diese relativ groß sind und zudem auch eine gewisse Komplexität aufweisen.

Es ist damit Aufgabe der vorliegenden Erfindung das vorstehend beschriebene Problem zu lösen.

Die Aufgabe wird gelöst durch den Gegenstand des unabhängigen Patentanspruchs 1, 9 und 10.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch einen Elektromotor, insbesondere als Antrieb für eine Werkzeugmaschine, enthaltend eine Energieversorgung, einen Stator mit einem Statorblechpaket und wenigstens zwei Spulenwicklungen, einen relativ zu dem Statorblechpaket rotierbaren Rotor sowie eine Steuereinrichtung.

Erfindungsgemäß ist vorgesehen, dass an einer Außenmantelfläche des Statorblechpakets wenigstens eine Aussparung zur Aufnahme wenigstens eines Widerstandselements enthalten ist, wobei das wenigstens eine Widerstandselement zur Umwandlung einer elektrischen Spannung, welche während eines Bremsvorgangs des Rotors durch die Spulenwicklungen des Stators erzeugbar ist, in Wärme ausgestaltet ist.

Entsprechend einer vorteilhaften Ausführungsform kann es möglich sein, dass die wenigstens eine Aussparung im Wesentlichen axial zu einer Statorachse verläuft.

Gemäß einer weiteren vorteilhaften Ausführungsform kann es möglich sein, dass die wenigstens eine Aussparung in einer radialen Ausrichtung zu einem Polzahn des Stators positioniert ist.

Entsprechend einer weiteren vorteilhaften Ausführungsform kann es möglich sein, dass in radialer Ausrichtung zu jedem Polzahn eine Aussparung positioniert ist.

Gemäß einer weiteren vorteilhaften Ausführungsform kann es möglich sein, dass die wenigstens eine Aussparung wenigstens teilweise mit einem Verbindungsmaterial befüllt ist.

Entsprechend einer weiteren vorteilhaften Ausführungsform kann es möglich sein, dass das Verbindungsmaterial wenigstens teilweise als Duroplast oder keramischer Mörtel ausgestaltet ist.

Gemäß einer alternativen Ausführungsform kann es möglich sein, dass wenigstens eine Lüftungseinrichtung zum Erzeugen wenigstens eines Lüftungsstroms enthalten ist, wobei das Widerstandselement wenigstens teilweise im Lüftungsstrom zum Abtransport einer Wärme des Widerstandselements positioniert ist.

Entsprechend einer alternativen Ausführungsform kann es möglich sein, dass das wenigstens eine Widerstandselement als Hochlastwiderstand ausgestaltet ist.

Des Weiteren wird die Aufgabe gelöst durch einen Stator für einen Elektromotor.

Darüber hinaus wird die Aufgabe gelöst durch Werkzeugmaschine mit Elektromotor.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

### Es zeigen:

- Figur 1: eine schematische Seitenansicht auf eine erfindungsgemäße Werkzeugmaschine gemäß einer beispielhaften Ausführungsform mit einem Elektromotor;
- Figur 2: eine perspektivische Ansicht auf ein Statorblechpaket mit Aussparungen und Widerstandselementen;
- Figur 3: eine Draufsicht auf einen Stator und Rotor;
- Figur 4: eine Detailansicht auf das Statorblechpaket mit einer Aussparung und einem Widerstandselement gemäß einem ersten Ausführungsbeispiel;
- Figur 5: eine Detailansicht auf das Statorblechpaket mit einer Aussparung und einem Widerstandselement gemäß einem zweiten Ausführungsbeispiel;
- Figur 6: eine Detailansicht auf das Statorblechpaket mit einer Aussparung und einem Widerstandselement gemäß einem dritten Ausführungsbeispiel; und
- Figur 7: eine Detailansicht auf das Statorblechpaket mit einer Aussparung und einem Widerstandselement gemäß einem vierten Ausführungsbeispiel.

### Ausführungsbeispiele:

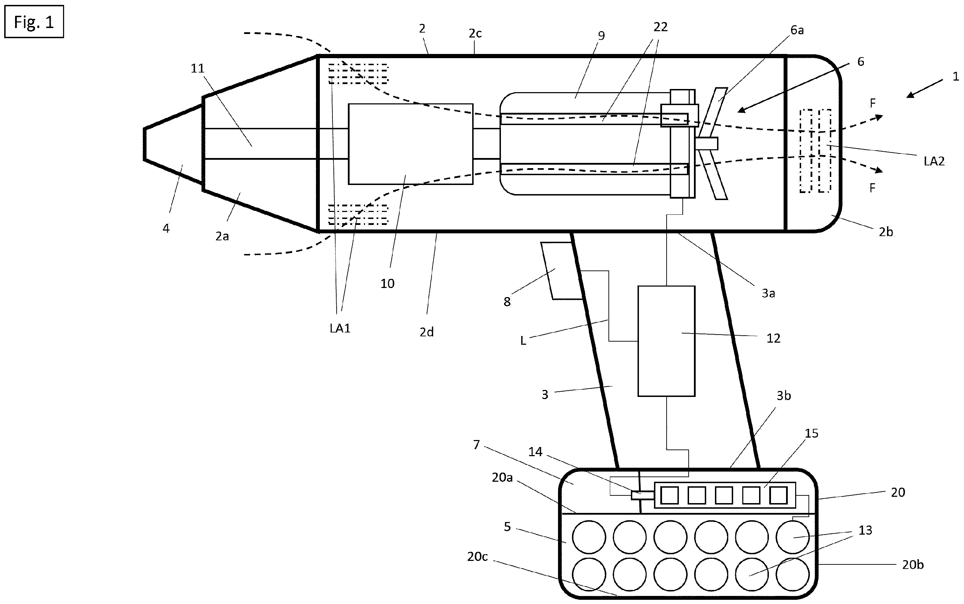

Figur 1 zeigt eine Werkzeugmaschine 1 gemäß einer beispielhaften Ausführungsform. Die Werkzeugmaschine 1 ist in Form einer akkubetriebenen Bohrmaschine ausgestaltet.

Gemäß einem alternativen Ausführungsbeispiel kann die Werkzeugmaschine auch in Form einer Säge, eines Schleifgeräts, eines Bohrhammers oder dergleichen ausgestaltet sein.

Die als Bohrmaschine ausgestaltete Werkzeugmaschine 1 enthält dabei im Wesentlichen ein Gehäuse 2, einen Handgriff 3, eine Werkzeugaufnahme 4 und eine Energieversorgung 5.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs. In den Figuren ist das Werkzeug nicht dargestellt.

In dem vorliegenden Ausführungsbeispiel kann das Werkzeug in Form eines Bohrers ausgestaltet. An dem unteren Ende 2d des Gehäuses 2 ist ein erstes Ende 3a des Handgriffs 3 positioniert. An dem zweiten Ende 3b des Handgriffs 3 ist eine Akku-Schnittstelle 7 vorgesehen.

Wie in Figur 1 gezeigt weist der Handgriff 3 einen Aktivierungsschalter 8 auf, mit dem die Werkzeugmaschine 1 in einen Aktivierungszustand oder Deaktivierungszustand eingestellt werden kann.

An die Akku-Schnittstelle 7 kann die Energieversorgung 5 wiederlösbar befestigt werden. In dem vorliegenden Ausführungsbeispiel ist die Energieversorgung 5 in Form eines Akkumulators ausgestaltete. Die Energieversorgung 5 dient zum Versorgen der Werkzeugmaschine mit elektrischer Energie.

Entsprechend einem alternativen Ausführungsbeispiel kann die Energieversorgung 5 auch als Stromkabel zum Verbinden der Werkzeugmaschine 1 mit einer Netzstromquelle (Steckdose) ausgestaltet sein. Die als Stromkabel ausgestaltete Energieversorgung 5 ist in den Figuren nicht dargestellt.

Im Inneren des Gehäuses 2 ist im Wesentlichen ein Elektromotor 9 als Antrieb, eine Getriebevorrichtung 10, eine Antriebswelle 11, eine Lüftungseinrichtung 6 und eine Steuereinrichtung 12 positioniert.

Der Elektromotor 9, die Getriebevorrichtung 10, die Antriebswelle 11 und die Werkzeugaufnahme 4 sind so im Inneren des Gehäuses 2 zueinander angeordnet, dass ein in dem Elektromotor 9 erzeugtes Drehmoment auf die Getriebevorrichtung 10, die Antriebswelle 11 und schließlich auf die Werkzeugaufnahme 4 bzw. auf das Werkzeug übertragen werden kann.

Die Steuereinrichtung 12 ist mittels entsprechenden Leitungen L mit dem Aktivierungsschalter 8, der Akku-Schnittstelle 7 und dem Elektromotor 9 verbunden.

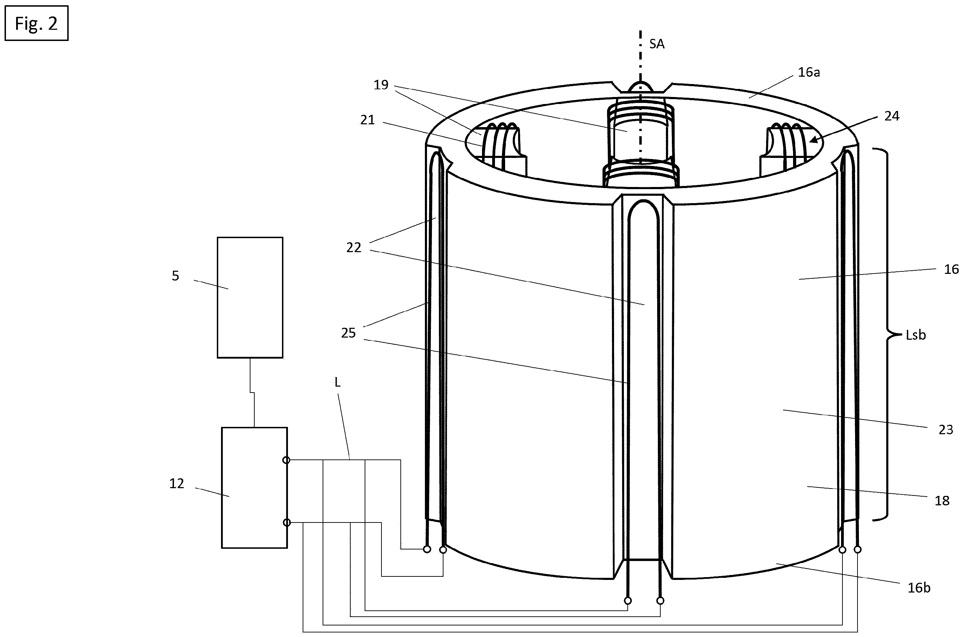

Der Elektromotor 9 ist in Form eines bürstenlosen Elektromotors ausgestaltet und enthält im Wesentlichen einen Stator 16 und einen Rotor 17, vgl. Figur 2.

An einem hinteren Ende des Stators 16 ist die Lüftungseinrichtung 6 in Form eines Lüfterrads 6a so positioniert, dass das Lüftungsrad 6a durch den Rotor 17 angetrieben wird. Wie in Figur 1 angedeutet, sind an dem vorderen Ende 2a des Gehäuses 2 Lüftungseinlässe LA1 und an dem hinteren Ende 2b des Gehäuses 2 Lüftungsauslässe LA2 vorgesehen. Wenn das Lüfterrad 6a durch den Rotor 17 angetrieben ist, wird ein Lüftungsstrom F durch das Gehäuse 2 erzeugt zum Abtransport einer Abwärme an der Oberfläche des Stators 16.

Die als Akkumulator ausgestaltete Energieversorgung 5 kann mit der Werkzeugmaschine 1 wiederlösbar verbunden werden, um die Werkzeugmaschine 1 mit elektrischer Energie zu versorgen. Der Akkumulator 5 enthält im Wesentlichen ein Akku-Gehäuse 20, eine Anzahl an Energiespeicherzellen 13, eine Akku-Schnittstelle 14 sowie eine Steuerungseinrichtung 15.

Die Energiespeicherzellen 13 können auch als Akku-Zellen bezeichnet werden und sind im Inneren des Akku-Gehäuses 20 angeordnet.

Das Akku-Gehäuse 20 enthält dabei im Wesentlichen ein Deckelelement 20a, vier Seitenwände 20b und ein Bodenelement 20c.

Die Akku-Schnittstelle 14 ist an der Außenseite des Deckelelements 20a angeordnet und dient zum elektrischen bzw. elektronischen sowie mechanischen Verbinden des Akkumulators 5 mit der Werkzeugmaschine 1 oder einer Ladevorrichtung.

Die Ladevorrichtung dient zum Laden des Akkumulators 5 mit elektrischer Energie und ist in den Figuren nicht dargestellt.

Zum elektrischen bzw. elektronischen Verbinden weist die Akku-Schnittstelle 14 einen Pluskontakt, einen Minuskontakt und einen Kommunikationskontakt auf. Der Plus- und Minuskontakt dient zur Erzeugen eines Stromkreises, wenn der Akkumulator 5 mit einer Werkzeugmaschine 1 oder einer Ladevorrichtung verbunden ist. Der Kommunikationskontakt dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherzellen 13 dienen zum Aufnehmen, Speichern und erneuten Abgeben elektrischer Energie. Die Energiespeicherzellen 13 sind in zylindrischer Form sowie auf Basis einer Lithium-lonen-Technologie ausgestaltet. Jede Energiespeicherzelle 13 enthält an einem Ende eine Kontakteinrichtung, die zur Übertragung elektrischer Energie dient. Die einzelnen Kontakteinrichtung sind über entsprechende Leitungen mit der Steuerungseinrichtung 15 des Akkumulators 5 verbunden.

Alternativ können die Energiespeicherzellen 13 auch auf einer anderen geeigneten Technologie basieren.

Die zylindrische Form der Energiespeicherzellen 13 ist ebenfalls optional, sodass auch jede andere geeignete Form bzw. Geometrie gewählt werden kann. So ist es insbesondere auch möglich, dass die Energiespeicherzellen 13 als Pouchzellen ausgestaltet sind.

Es ist zudem auch möglich, dass der Akkumulator 5 sowohl zylindrische Energiespeicherzellen 13 als auch Pouch-Zellen enthält. Es ist insbesondere möglich, dass der Akkumulator 5 lediglich eine einzige zylindrische Energiespeicherzelle 13 und eine einzige Pouchzelle enthält.

Die Steuerungseinrichtung 15 regelt und steuert verschiedene Funktionen des Akkumulators 5. Zu den Funktion gehört unter anderen die Steuerung der Aufnahme und Abgabe von elektrischer Energie in bzw. aus den Energiespeicherzellen 13. Darüber hinaus wird mit Hilfe der Steuerungseinrichtung 15 die Menge an elektrischer Energie gesteuert, die von den Energiespeicherzellen 13 aufgenommen oder abgegeben werden sollen.

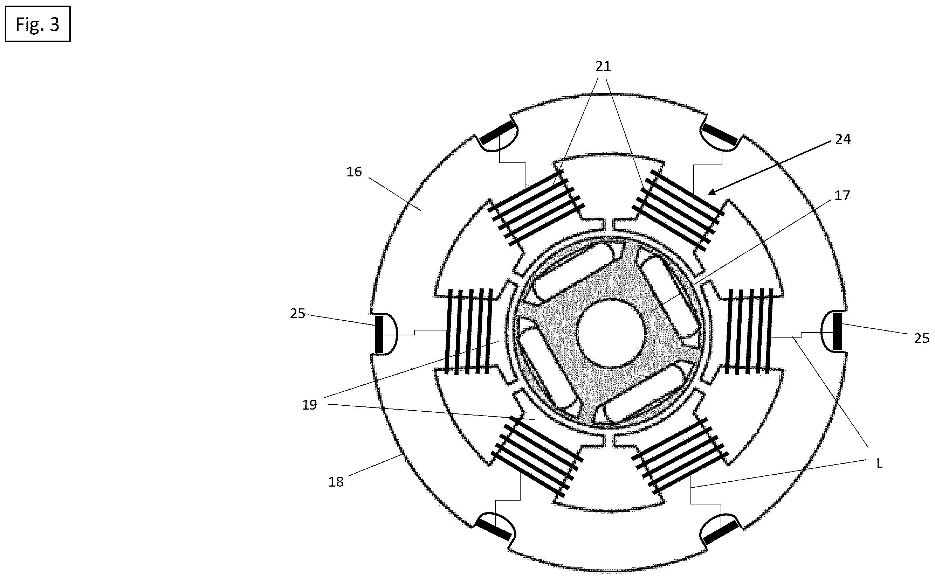

Wie in Figur 3 angedeutet ist der Rotor 17 im Inneren des Stators 16 positioniert und zudem drehbar zu dem Stator 16 ausgestaltet.

Wie in Figur 2 gezeigt enthält der Stator 16 ein Statorblechpaket 18 mit vier radial nach innen gerichtete Polzähne 19. Das Statorblechpaket 18 besteht im Wesentlichen aus einer Anzahl an übereinander gestapelten Profilblechen.

Es sind jeweils zwei Polzähne 19 einander gegenüber positioniert. Gemäß einer alternativen Ausführungsform können auch mehr als vier Polzähne 19 vorgesehen sein. Die Polzähne 19 dienen zum jeweiligen Aufnehmen einer Spulendrahts 21 zum Erzeugen einer Spule 24. Die Spulen 24 sind entsprechend über die Steuereinrichtung 12 mit der Energieversorgung 5 verbunden, um eine elektrische Spannung an die Spulen 24 anzulegen. Mit anderen Worten: die Spulen 24 werden bestromt. Mit Hilfe der Spulen 24 wird ein abwechselndes Magnetfeld erzeugt, durch welches der Rotor 17 gedreht wird.

An einer Außenmantelfläche 23 des Statorblechpakets 18 sind eine Anzahl an axial zu einer Statorachse SA verlaufende Aussparung 22 positioniert. In Figur 2 ist ein Statorblechpaket 18 gemäß einem ersten Ausführungsbeispiel mit vier Aussparungen 22 gezeigt. Die Aussparung 22 kann auch als Vertiefung, Rinne, Nut oder Kavität bezeichnet werden.

Gemäß einem zweiten Ausführungsbeispiel hat das Statorblechpaket 18 sechs Aussparungen 22, vgl. Figur 3.

Entsprechend einem alternativen Ausführungsbeispiel kann das Statorblechpaket 18 mehr als sechs Polzähne 19 sowie mehr als sechs Aussparungen 22 enthalten. Die Anzahl an Polzähnen 19 und Aussparungen 22 müssen dabei nicht gleich sein.

Wie in den Figuren 2 und 3 zu erkennen ist, sind die Aussparungen 22 gemäß dem ersten und zweiten Ausführungsbeispiel an der Außenmantelfläche 23 mit den Polzähnen 19 entsprechend ausgerichtet. Mit anderen Worten: eine Aussparung 22 befindet sich in radialer Ausrichtung zu einem Polzahn 19.

Wie nachfolgend noch beschrieben, kann eine Aussparung 22 in radialer Ausrichtung auch zwischen zwei benachbarten Polzähnen 19 positioniert sein. Gemäß den gezeigten Ausführungsbeispielen erstrecken sich die Aussparungen 22 über die gesamte Länge L des Statorblechpakets 18. Die Länge einer Aussparung 22 entspricht damit der Länge des Statorblechpakets 18.

Es ist entsprechend einem alternativen, in den Figuren nicht dargestellten Ausführungsbeispiel auch möglich, dass ein oder mehrere Aussparungen 22 kürzer sind als das Statorblechpaket 18, wodurch sich ein oder mehrere Aussparungen 22 nicht über die gesamte Länge des Statorblechpakets 18 erstrecken.

Wie in den Figuren angedeutet, dient eine Aussparung 22 zur Aufnahme eines Widerstandselements 25, welche jeweils über entsprechenden Leitungen mit der Steuereinrichtung 12 sowie mit den Spulen 24 des Stators 16 verbunden ist. In Figur 3 sind die Verbindungen zwischen den Spulen 24 mit den jeweiligen Widerstandselementen 25 andeutungsweise dargestellt. In den Ausführungsbeispiel in Figur 2 ist das Widerstandselement 25 als stromleitenden Draht in Form einer Kurve oder eines Bogens ausgestaltet.

Wenn die Drehgeschwindigkeit des Rotors 17 relativ zu dem Stator 16 reduziert oder der Rotor 17 sogar komplett gestoppt werden soll, muss mit Hilfe eines Bremsvorgang der Rotor 17 gebremst werden. Beim Bremsen des Rotors 17 wird an den Spulen 24 des Stators 16 eine elektrische Spannung induziert. Durch die Verbindung der Spulen 24 über Leitungen L mit den jeweiligen Widerstandselementen 25, kann die induzierte elektrische Spannung in den Widerstandselementen 25 in Wärme umgewandelt werden.

Des Weiteren dient eine Aussparung 22 auch als Strömungskanal, durch den ein Lüftungsstrom F erzeugt von der Lüftungseinrichtung 6 strömen kann.

Wie vorstehend bereits beschrieben, erzeugt das von dem Rotor 17 angetriebene Lüfterrad 6a einen Lüftungsstrom F, welcher zum Kühlen über die Manteloberfläche des Stators 16 bzw. Statorblechpakets strömt. Die Aussparungen 22 erhöhen die Außenmantelfläche 23 des Statorblechpakets, wodurch ein besserer Wärmeabtransport möglich ist. Des Weiteren leiten die Aussparungen 22 den Lüftungsstrom F wie Kanäle gezielt an den Widerstandselementen 25 entlang und kühlen diese effektiv.

Entsprechend einem weiteren alternativen Ausführungsbeispiel ist es auch möglich, dass sich nicht in jeder Aussparung 22 ein Widerstandselement 25 befindet. Vorzugsweise befinden sich in zwei gegenüberliegenden Aussparungen 22 jeweils ein Widerstandselement 25.

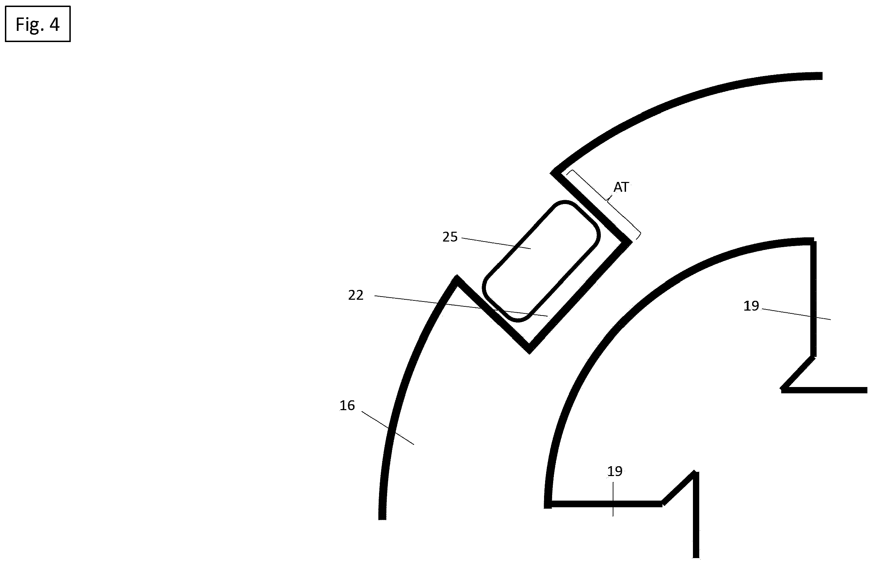

In Figur 4 ist eine Detailansicht auf das Statorblechpaket mit einer Aussparung 22 und Widerstandselement 25 gemäß einem ersten Ausführungsbeispiel gezeigt. Wie zu erkennen ist, befindet sich die Aussparung 22 mit einem Widerstandselement 25 zwischen zwei benachbarten Polzähnen 19.

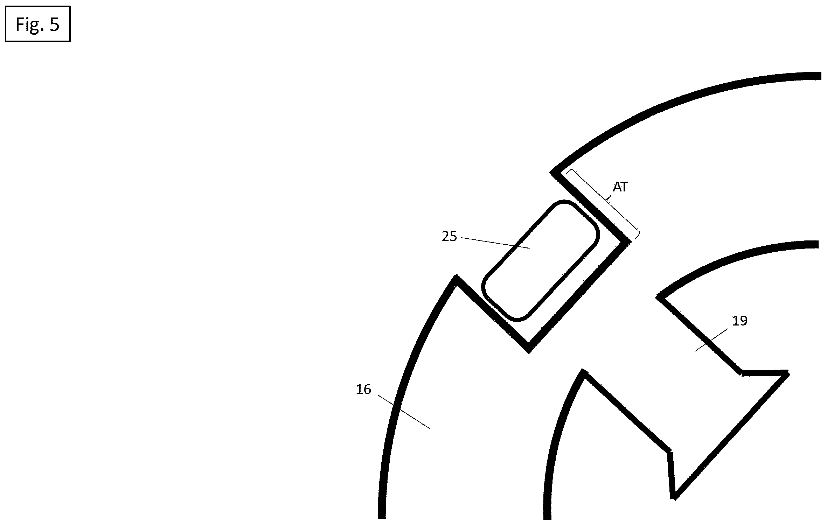

In Figur 5 ist eine Detailansicht auf das Statorblechpaket mit einer Aussparung 22 und Widerstandselement 25 gemäß einem zweiten Ausführungsbeispiel gezeigt. Wie zu erkennen ist, befindet sich die Aussparung 22 mit einem Widerstandselement 25 in radialer Ausrichtung zu einem Polzahn 19.

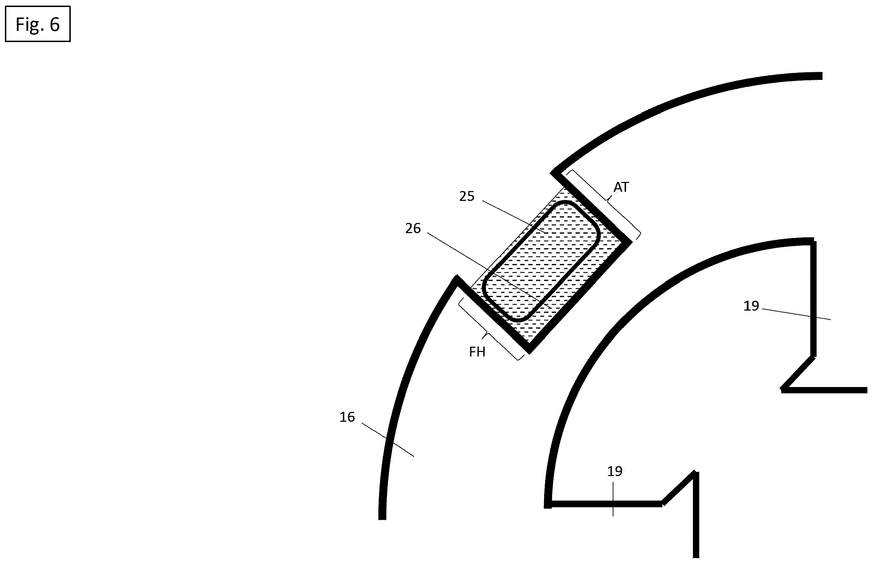

In Figur 6 ist eine Detailansicht auf das Statorblechpaket mit einer Aussparung 22 und Widerstandselement 25 gemäß einem dritten Ausführungsbeispiel gezeigt. Wie zu erkennen ist, befindet sich die Aussparung 22 mit einem Widerstandselement 25 zwischen zwei benachbarten Polzähnen 19. Die Aussparung 22 ist mit einem Duroplast als Verbindungsmaterial 26 nahezu vollständig gefüllt. Wie in Figur 6 angedeutet ist die Füllhöhe FH des Verbindungsmaterials 26 geringer als die Tiefe der Aussparung 22.

Gemäß einer alternativen Ausführungsform kann die Füllhöhe FH des Verbindungsmaterials 26 der Tiefe AT der Aussparung 22 entsprechen.

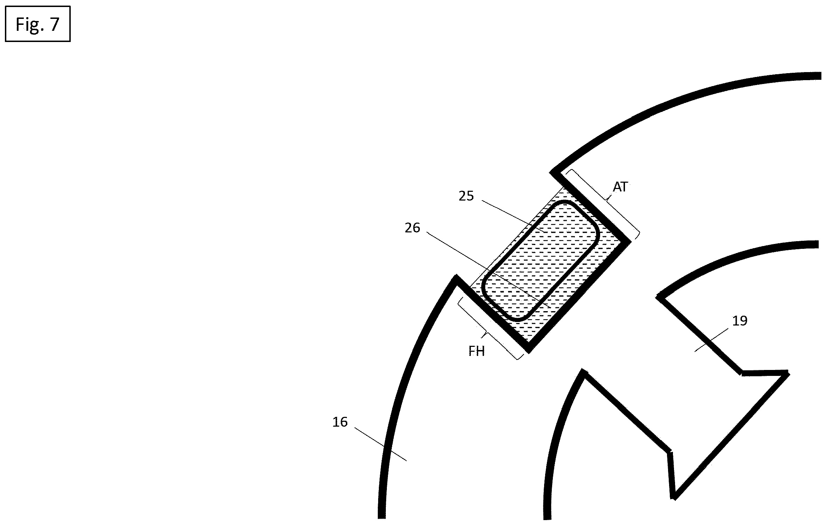

In Figur 7 ist eine Detailansicht auf das Statorblechpaket mit einer Aussparung 22 und Widerstandselement 25 gemäß einem vierten Ausführungsbeispiel gezeigt. Wie zu erkennen ist, befindet sich die Aussparung 22 mit einem Widerstandselement 25 in radialer Ausrichtung zu einem Polzahn 19. Die Aussparung 22 ist mit einem Duroplast als Verbindungsmaterial 26 nahezu vollständig gefüllt. Wie in Figur 7 angedeutet ist die Füllhöhe FH des Verbindungsmaterials geringer als die Tiefe der Aussparung 22.

Gemäß einer alternativen Ausführungsform kann die Füllhöhe FH des Verbindungsmaterials 26 der Tiefe AT der Aussparung 22 entsprechen.

### Bezugszeichen

- 1: Werkzeugmaschine
- 2: Gehäuse
- 2a: vorderes Ende des Gehäuses
- 2b: hinteres Ende des Gehäuses
- 2c: oberes Ende des Gehäuses
- 2d: unteres Ende des Gehäuses
- 3: Handgriff
- 3a: erstes Ende des Handgriffs
- 3b: zweites Ende des Handgriffs
- 4: Werkzeugaufnahme
- 5: Energieversorgung
- 6: Lüftungseinrichtung
- 6a: Lüfterrad
- 7: Akku-Schnittstelle
- 8: Aktivierungsschalter
- 9: Elektromotor
- 10: Getriebevorrichtung
- 11: Antriebswelle
- 12: Steuereinrichtung
- 13: Energiespeicherzelle
- 14: Akku-Schnittstelle
- 15: Steuerungseinrichtung
- 16: Stator
- 16a: oberes Ende des Stators
- 16b: unteres Ende des Stators
- 17: Rotor
- 18: Statorblechpaket
- 19: Polzahn
- 20: Akku-Gehäuse
- 20a: Deckelelement
- 20b: Seitenwand
- 20c: Bodenelement
- 21: Spulendraht
- 22: Aussparung
- 23: Außenmantelfläche des Statorblechpakets
- 24: Spule
- 25: Widerstandselement
- 26: Verbindungsmaterial

- LA1: Lüftungseinlass
- LA2: Lüftungsauslass
- F: Lüftungsstrom
- Lsb: Länge des Statorblechpakets
- L: Leitung
- SA: Statorachse
- FH: Füllhöhe des Verbindungsmaterials
- AT: Tiefe der Aussparung

## Patentansprüche

1. Elektromotor (9), insbesondere als Antrieb für eine Werkzeugmaschine (1), enthaltend eine Energieversorgung (5), einen Stator (16) mit einem Statorblechpaket (18) und wenigstens zwei Spulen (24), einen relativ zu dem Statorblechpaket (18) rotierbaren Rotor (17) sowie eine Steuereinrichtung (12),
**dadurch gekennzeichnet, dass** an einer Außenmantelfläche (23) des Statorblechpakets (18) wenigstens eine Aussparung (22) zur Aufnahme wenigstens eines Widerstandselements (25) enthalten ist, wobei das wenigstens eine Widerstandselement (25) zur Umwandlung einer elektrischen Spannung, welche während eines Bremsvorgangs des Rotors (17) durch die Spulen (24) des Stators (16) erzeugbar ist, in Wärme ausgestaltet ist.

2. Elektromotor (9) nach Anspruch 1,
**dadurch gekennzeichnet, dass** die wenigstens eine Aussparung (22) im Wesentlichen axial zu einer Statorachse (SA) verläuft.

3. Elektromotor (9) nach Anspruch 1 oder 2,
**dadurch gekennzeichnet, dass** die wenigstens eine Aussparung (22) in einer radialen Ausrichtung zu einem Polzahn (19) des Stators (16) positioniert ist.

4. Elektromotor (9) nach Anspruch 1 oder 2,
**dadurch gekennzeichnet, dass** in radialer Ausrichtung zu jedem Polzahn (19) eine Aussparung (22) positioniert ist.

5. Elektromotor (9) nach wenigstens einem der Ansprüche 1 bis 4,
**dadurch gekennzeichnet, dass** die wenigstens eine Aussparung (22) wenigstens teilweise mit einem Verbindungsmaterial befüllt ist.

6. Elektromotor (9) nach Anspruch 5,
**dadurch gekennzeichnet, dass** das Verbindungsmaterial (26) wenigstens teilweise als Duroplast oder keramischer Mörtel ausgestaltet ist.

7. Elektromotor (9) nach wenigstens einem der Ansprüche 1 bis 6,
**dadurch gekennzeichnet, dass** wenigstens eine Lüftungseinrichtung (6) zum Erzeugen wenigstens eines Lüftungsstroms (F) enthalten ist, wobei das Widerstandselement (25) wenigstens teilweise im Lüftungsstrom (F) zum Abtransport einer Wärme des Widerstandselements (25) positioniert ist.

8. Elektromotor (9) nach wenigstens einem der Ansprüche 1 bis 7,
**dadurch gekennzeichnet, dass** das wenigstens eine Widerstandselement (25) als Hochlastwiderstand ausgestaltet ist.

9. Stator (16) für einen Elektromotor (9) nach wenigstens einem der Ansprüche 1 bis 8.

10. Werkzeugmaschine (1) mit Elektromotor (9) nach wenigstens einem der Ansprüche 1 bis 8.
